# EUROPEAN PATENT APPLICATION

(11) **EP 4 803 769 A1**
(43) Date of publication of application: **09.09.2026**
(21) Application number: 25891859.8
(22) Date of filing: 20.10.2025
(51) Int. Cl.: F16D 41/10, F16D 1/072

(54) **REVERSE INPUT BLOCKING CLUTCH**

(30) Priority: 15.11.2024 CN 202411641425
(71) Applicant: NSK Ltd., Tokyo 141-8560 (JP)
(72) Inventor: JU, Chao, Kunshan Jiangsu 215332 (CN)
(74) Representative: Müller-Boré & Partner Patentanwälte PartG mbB
(86) International application number: PCT/JP2025/036891
(87) International publication number: WO 2026/105540

(57) **Abstract**

A configuration of a reverse-input blocking clutch capable of preventing a stopper member from coming off from an output member and reducing a number of parts is provided.

An output member 4 has a mounting shaft portion 20 that is arranged so as to be coaxial with an output-side engaging portion 19 and protrudes toward a first side in an axial direction from an end surface on the first side in the axial direction of the output-side engaging portion 19. A stopper member 6 has a cylindrical portion 52 fitted onto the mounting shaft portion 20 of the output member 4; a flange portion 53 facing in the axial direction an end surface 49 on the first side in the axial direction of the engaging element 5; and a crimped portion 51 formed in at least a part of the cylindrical portion 52 or connected to at least a part in a circumferential direction of an end portion on the first side in the axial direction of the cylindrical portion 52, the stopper member being crimped and fixed to the mounting shaft portion 20 by the crimped portion 51.

## Description

### TECHNICAL FIELD

The present disclosure relates to a reverse-input blocking clutch that transmits rotational torque input to an input member to an output member while completely blocking rotational torque reversely input to the output member and not transmitting the rotational torque to the input member, or transmitting only a part of the rotational torque to the input member while blocking a remaining part thereof.

### BACKGROUND ART

A reverse-input blocking clutch has a function of transmitting rotational torque input to an input member connected to an input-side mechanism such as a drive source to an output member connected to an output-side mechanism such as a speed-reducing mechanism, while completely blocking rotational torque reversely input to the output member and not transmitting the rotational torque to the input member, or transmitting only a part of the rotational torque to the input member while blocking a remaining part thereof.

Reverse-input blocking clutches include, depending on a difference in a mechanism that blocks rotational torque reversely input to an output member, a lock-type reverse-input blocking clutch including a mechanism that prevents rotation of the output member when rotational torque is reversely input to the output member, and a free-type reverse-input blocking clutch including a mechanism that allows the output member to idle when rotational torque is input to the output member. Whether to use the lock-type reverse-input blocking clutch or the free-type reverse-input blocking clutch is appropriately determined depending on an application of a device in which the reverse-input blocking clutch is incorporated.

In a lock-type reverse-input blocking clutch described in WO2023/136149, when rotational torque is input to an input member, an input-side engaging portion of the input member engages with an input-side engaged portion of an engaging element, whereby the engaging element moves in a direction away from a pressed surface provided on a pressed member, and an output-side engaged portion of the engaging element is engaged with an output-side engaging portion of an output member, thereby transmitting the rotational torque input to the input member to the output member. On the other hand, when rotational torque is reversely input to the output member, the output-side engaging portion of the output member engages with the output-side engaged portion of the engaging element, whereby the engaging element moves in a direction toward the pressed surface, and presses the pressing surface against the pressed surface so that the pressing surface frictionally engages with the pressed surface.

### CITATION LIST

### PATENT LITERATURE

Patent Literature 1: WO2023/136149

### SUMMARY OF INVENTION

### TECHNICAL PROBLEM

In a reverse-input blocking clutch, if axial movement of the engaging element with respect to the output member is not restricted, the engaging element may tilt in the axial direction. When the engaging element moves toward the outside in the radial direction while being tilted in the axial direction, the pressing surface and the pressed surface locally come into contact with each other, causing biting, which may unnecessarily increase a force required to switch from the locked state or the semi-locked state to the unlocked state or the semi-unlocked state, or may cause plastic deformation or wear on the pressing surface and/or the pressed surface.

In the reverse-input blocking clutch described in WO2023/136149, axial movement of the engaging element with respect to the output member is restricted by using two spacers and a retaining ring which is a stopper member. Specifically, by arranging the spacers on both sides in the axial direction of the engaging element, the engaging element is positioned appropriately in the axial direction, and by locking the retaining ring to an end portion of the output member, axial movement of the engaging element with respect to the output member is restricted. Further, in a manufacturing factory of the reverse-input blocking clutch, after an assembly is manufactured by sub-assembling the output member, the engaging element, the two spacers, and the retaining ring, the assembly is conveyed to another process.

In the reverse-input blocking clutch described in WO 2023/136149, since a structure is adopted in which a retaining ring having a small outer diameter is locked in a locking groove formed on the outer circumferential surface of the output member, there is a possibility that, when an assembly is conveyed, the retaining ring comes off from the output member and the assembly is disassembled. Further, since spacers are required on both sides in the axial direction of the engaging element, the number of parts increases, which causes inconveniences such as an increase in management cost of parts and an increase in assembly man-hours.

An object of the present disclosure is to achieve a structure of a reverse-input blocking clutch that facilitates use of a stopper member having a dimension larger than that of the stopper member composed of a conventional retaining ring, that can prevent the stopper member from coming off from an output member, and that can reduce the number of parts.

### SOLUTION TO PROBLEM

A reverse-input blocking clutch of an aspect of the present disclosure includes a pressed member; an input member; an output member; an engaging element; and a stopper member.

The pressed member has a pressed surface on an inner circumferential surface thereof.

The input member has an input-side engaging portion arranged on an inner side in a radial direction of the pressed surface, is connected to an input-side mechanism on a first side in an axial direction, and is arranged so as to be coaxial with the pressed surface.

The output member has an output-side engaging portion arranged further on the inner side in the radial direction than the input-side engaging portion, is connected to an output-side mechanism on a second side in the axial direction, and is arranged so as to be coaxial with the pressed surface.

The engaging element has a pressing surface facing the pressed surface, an input-side engaged portion capable of engaging with the input-side engaging portion, and an output-side engaged portion capable of engaging with the output-side engaging portion, and is arranged so as to allow the pressing surface to move in a direction toward and away from the pressed surface.

The stopper member regulates axial movement of the engaging element with respect to the output member.

The engaging element, when rotational torque is input to the input member, moves in a direction away from the pressed surface with respect to the radial direction based on the input-side engaging portion engaging with the input-side engaged portion, and transmits the rotational torque input to the input member to the output member by causing the output-side engaged portion to engage with the output-side engaging portion, whereas when rotational torque is reversely input to the output member, presses the pressing surface against the pressed surface based on the output-side engaging portion engaging with the output-side engaged portion so as to frictionally engage the pressing surface with the pressed surface.

The output member has a mounting shaft portion that protrudes toward the first side in the axial direction from an end surface on the first side in the axial direction of the output-side engaging portion.

The stopper member has a cylindrical portion fitted onto the mounting shaft portion; a flange portion connected to the second side in the axial direction of the cylindrical portion and facing in the axial direction an end surface on the first side in the axial direction of the engaging element; and a crimped portion formed in at least a part of the cylindrical portion or connected to at least a part in the circumferential direction of an end portion on the first side in the axial direction of the cylindrical portion, and is crimped and fixed to the mounting shaft portion by the crimped portion.

In the reverse-input blocking clutch of an aspect of the present disclosure, the crimped portion is connected to the end portion on the first side in the axial direction of the cylindrical portion and is configured in a protruding piece shape.

In this case, the crimped portion can be provided at two locations on opposite sides in a diametrical direction of the cylindrical portion.

In the reverse-input blocking clutch of an aspect of the present disclosure, the crimped portion can be configured in an annular shape continuous in the circumferential direction.

In this case, the crimped portion can be connected to the end portion on the first side in the axial direction of the cylindrical portion and is configured in a tapered cylindrical shape. Alternatively, the crimped portion can be formed at a middle portion in the axial direction of the cylindrical portion.

In the reverse-input blocking clutch of an aspect of the present disclosure, the mounting shaft portion can have, on an outer circumferential surface thereof, an engaging surface facing the second side in the axial direction and engaging with the crimped portion in the axial direction.

In this case, the mounting shaft portion can have, on the outer circumferential surface thereof, a recessed portion into which the crimped portion enters, and the engaging surface can be composed of an inner surface of the recessed portion.

In the reverse-input blocking clutch of an aspect of the present disclosure, the recessed portion can be provided at two locations on opposite sides in the diametrical direction of the outer circumferential surface of the mounting shaft portion.

In the reverse-input blocking clutch of an aspect of the present disclosure, a gap in the axial direction is provided between the end surface on the first side in the axial direction of the engaging element and a side surface on the second side in the axial direction of the flange portion.

In the reverse-input blocking clutch of an aspect of the present disclosure, the flange portion can have an outer peripheral edge portion having a non-circular shape when viewed from the axial direction, and engage with the input-side engaging portion in the circumferential direction to prevent relative rotation of the stopper member with respect to the output member.

In the reverse-input blocking clutch of an aspect of the present disclosure, the flange portion can have an outer peripheral edge portion having a circular shape when viewed from the axial direction, and have an outer diameter smaller than a diameter of an inscribed circle of a plurality of the input-side engaging portions.

In the reverse-input blocking clutch of an aspect of the present disclosure, the stopper member is brought into contact with an end surface on the first side in the axial direction of the output-side engaging portion, and is positioned in the axial direction with respect to the output member.

In the reverse-input blocking clutch of an aspect of the present disclosure, the mounting shaft portion can have a non-cylindrical shape.

In this case, the mounting shaft portion can have a cross-sectional shape that is the same as or similar to a shape of the end surface on the first side in the axial direction of the output-side engaging portion.

In the reverse-input blocking clutch of an aspect of the present disclosure, the output member can have an output shaft portion having an end surface on the first side in the axial direction from which the output-side engaging portion protrudes toward the first side in the axial direction. In this case, a spacer can be arranged between the end surface on the first side in the axial direction of the output shaft portion and an end surface on the second side in the axial direction of the engaging element.

### EFFECT OF INVENTION

With a reverse-input blocking clutch of an aspect of the present disclosure, it is possible to facilitate use of a stopper member having a larger size than that of a conventional stopper member composed of a retaining ring, and to prevent the stopper member from coming off from the output member, and to reduce the number of parts.

### BRIEF DESCRIPTION OF DRAWINGS

[FIG. 1] FIG. 1 is a cross-sectional view illustrating a reverse-input blocking clutch of a first example of an embodiment of the present disclosure.
[FIG. 2] FIG. 2 is a cross-sectional view of section of I-I of FIG. 1.
[FIG. 3] FIG. 3 is an enlarged view illustrating a portion of FIG. 1.
[FIG. 4] FIG. 4 is an enlarged view illustrating a portion of FIG. 2.
[FIG. 5] FIG. 5 is a perspective view illustrating a portion on a first side in an axial direction of the reverse-input blocking clutch of the first example, with a pressed member and an input member omitted.
[FIG. 6] FIG. 6 is a perspective view illustrating FIG. 5 with a stopper member omitted.
[FIG. 7] FIG. 7 is a cross-sectional view of section of II-II of FIG. 1.
[FIG. 8] FIG. 8 is a cross-sectional view of section of II-II of FIG. 1 illustrating a state where rotational torque is input to the input member, with a biasing member omitted.
[FIG. 9] FIG. 9 is a cross-sectional view of section of II-II of FIG. 1 illustrating a state where rotational torque is input to the output member, with the biasing member omitted.
[FIG. 10] FIG. 10 is a perspective view illustrating the stopper member taken out from the reverse-input blocking clutch of the first example before a crimped portion is formed.
[FIG. 11] FIG. 11 is a view corresponding to FIG. 3, illustrating a reverse-input blocking clutch of a second example of an embodiment of the present disclosure.
[FIG. 12] FIG. 12 is a perspective view corresponding to FIG. 5, illustrating the reverse-input blocking clutch of the second example.

### DESCRIPTION OF EMBODIMENTS

### [First Example]

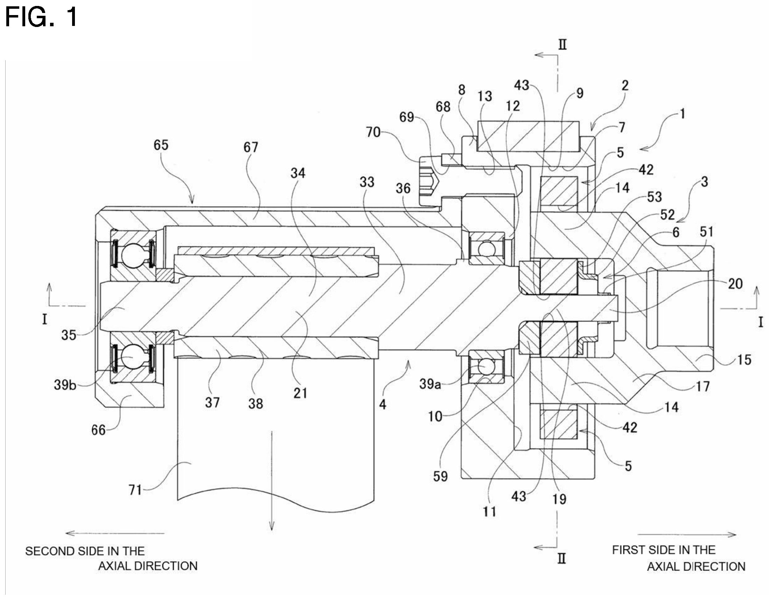

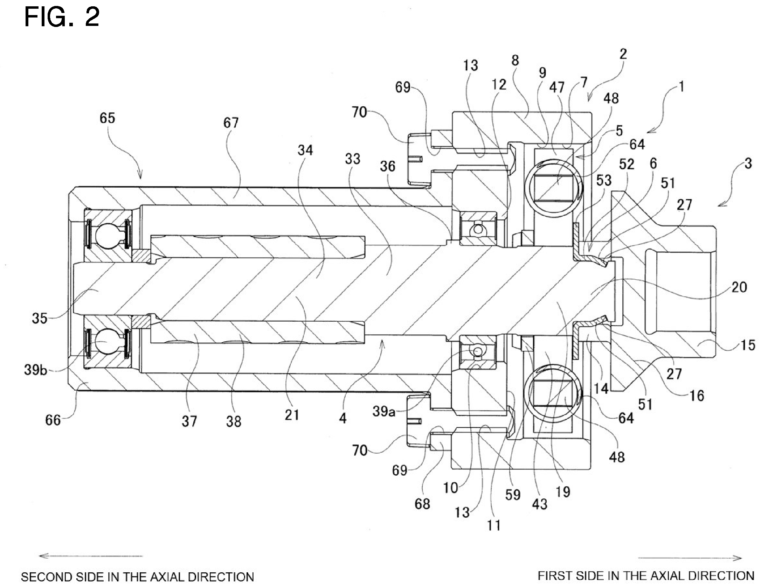

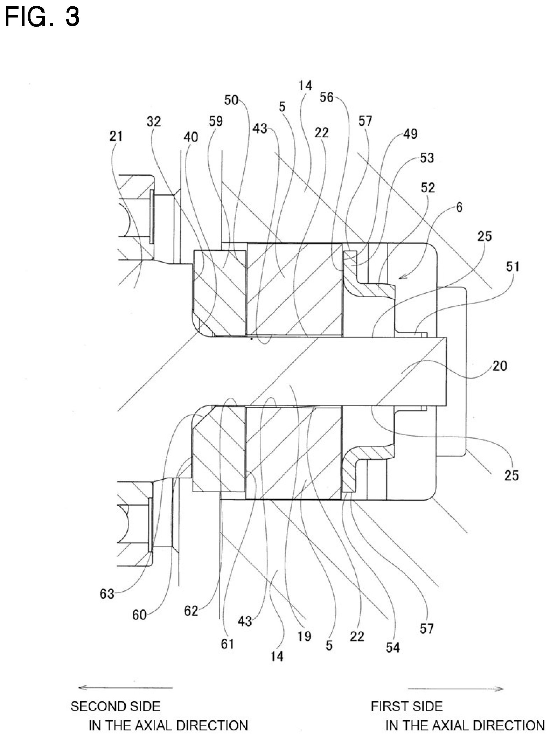

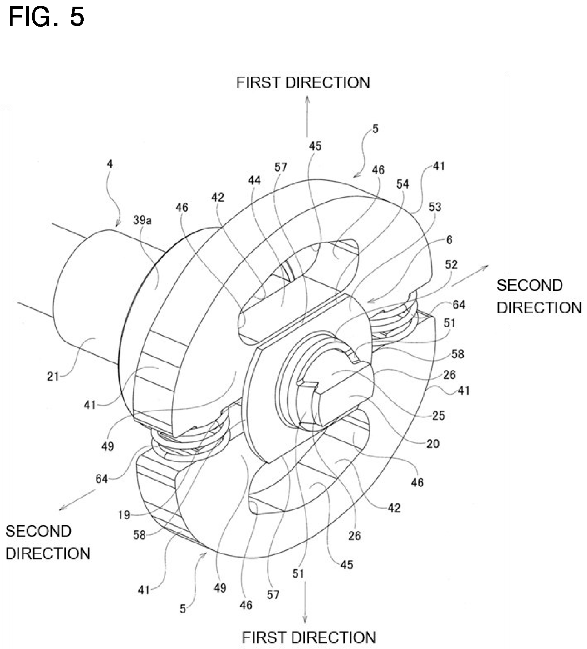

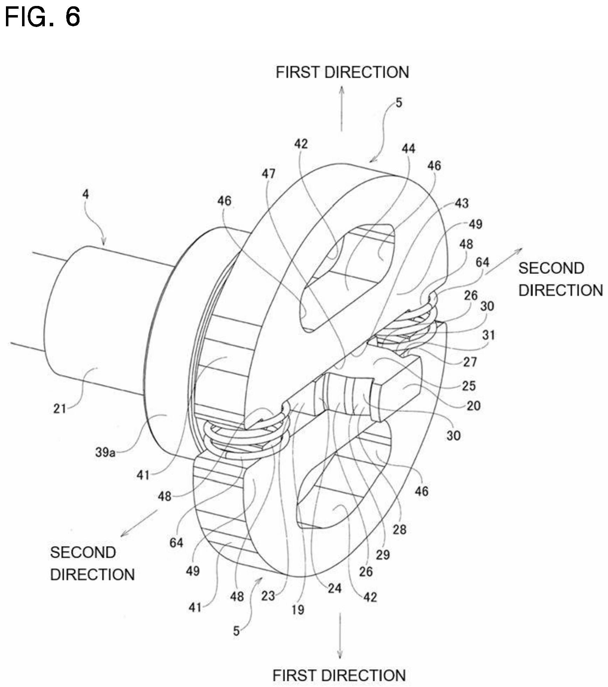

A reverse-input blocking clutch of a first example of an embodiment of the present disclosure will be described with reference to FIG. 1 to FIG. 10.

In the following description, unless otherwise specified, an axial direction, a radial direction, and a circumferential direction refer to an axial direction, a radial direction, and a circumferential direction of a pressed surface 7. The axial direction, the radial direction, and the circumferential direction of the pressed surface 7 coincide with an axial direction, a radial direction, and a circumferential direction of an input member 3, and also coincide with an axial direction, a radial direction, and a circumferential direction of an output member 4. Further, a first side in the axial direction refers to an input side of the reverse-input blocking clutch 1 (a right side in FIG. 1 to FIG. 4), and a second side in the axial direction refers to an output side of the reverse-input blocking clutch 1 (a left side in FIG. 1 to FIG. 4).

### [Description of Structure of Reverse-Input Blocking Clutch]

The reverse-input blocking clutch 1 of the present disclosure includes a pressed member 2, an input member 3, an output member 4, an engaging element 5, and a stopper member 6.

Of elements configuring the reverse-input blocking clutch 1, the pressed member 2, the input member 3, and the engaging element 5 have configurations and functions similar to those of a conventional reverse-input blocking clutch.

The pressed member 2 has a pressed surface 7 on an inner circumferential surface thereof. The input member 3 has an input-side engaging portion 14 arranged on the inner side in the radial direction of the pressed surface 7 and is arranged so as to be coaxial with the pressed surface 7. The output member 4 has an output-side engaging portion 19 arranged further on the inner side in the radial direction than the input-side engaging portion 14 and is arranged so as to be coaxial with the pressed surface 7. The engaging element 5 has a pressing surface 41 facing the pressed surface 7, an input-side engaged portion 42 capable of engaging with the input-side engaging portion 14, and an output-side engaged portion 43 capable of engaging with the output-side engaging portion 19, and is arranged so as to be able to move in the radial direction.

When rotational torque is input to the input member 3, the engaging element 5 moves in a direction away from the pressed surface 7 with respect to the radial direction based on the input-side engaging portion 14 engaging with the input-side engaged portion 42, and the output-side engaged portion 43 is engaged with the output-side engaging portion 19 so as to transmit the rotational torque input to the input member 3 to the output member 4.

On the other hand, when rotational torque is reversely input to the output member 4, the engaging element 5 presses the pressing surface 41 against the pressed surface 7 based on the output-side engaging portion 19 engaging with the output-side engaged portion 43 so as to frictionally engage the pressing surface 41 with the pressed surface 7. That is, the reverse-input blocking clutch 1 completely blocks rotational torque reversely input to the output member 4 and does not transmit the rotational torque to the input member 3, or transmits only a part of the rotational torque to the input member 3 and blocks a remaining part thereof.

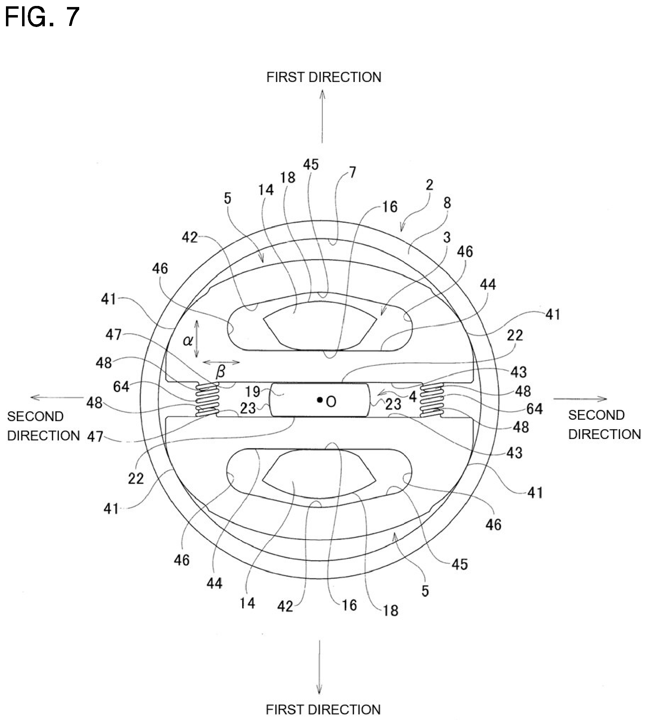

In the present specification, a direction toward and away from the pressed surface 7 with respect to the pressing surface 41 of the engaging element 5 is defined as a first direction (an up-down direction in FIG. 7 to FIG. 9), and a direction perpendicular to both the axial direction of the pressed surface 7 and the first direction is defined as a second direction (a left-right direction in FIG. 7 to FIG. 9). With respect to the engaging element 5, a direction coinciding with the first direction is defined as a radial direction of the engaging element 5 (a direction indicated by an arrow α in FIG. 7), and a direction coinciding with the second direction is defined as a width direction of the engaging element 5 (a direction indicated by an arrow β in FIG. 7).

The stopper member 6 is provided in order to restrict axial movement of the engaging element 5 with respect to the output member 4.

On the inner side in the radial direction of the pressed surface 7, the input-side engaging portion 14 of the input member 3 and the output-side engaging portion 19 of the output member 4 are arranged. With respect to the first direction, on the inner side in the radial direction of the pressed surface 7, the input-side engaging portion 14, the input-side engaged portion 42, the output-side engaged portion 43, and the output-side engaging portion 19 are arranged in this order. Further, on the inner side in the radial direction of the pressed surface 7, the input-side engaging portion 14, the output-side engaging portion 19, and the engaging element 5 are rotatable.

In particular, the reverse-input blocking clutch 1 of the present disclosure is characterized in that, by improving configurations of the output member 4 and the stopper member 6, the reverse-input blocking clutch 1 is configured so that the stopper member 6 is prevented from coming off from the output member 4. In the following, constituent elements of the reverse-input blocking clutch will be described focusing on the configurations of the output member 4 and the stopper member 6.

### [Pressed Member]

The pressed member 2 has a pressed surface 7 on an inner circumferential surface thereof. The pressed surface 7 constitutes a surface that comes into contact with the pressing surface 41 of the engaging element 5 when the engaging element 5 moves toward the outer side in the radial direction, which is a direction toward the pressed surface 7 with respect to the first direction. That is, the pressed surface 7 has a function of frictionally engaging with the pressing surface 41 of the engaging element 5 when rotational torque is reversely input to the output member 4.

The pressed member 2 is supported by a stationary portion that does not rotate during use of the reverse-input blocking clutch 1, or is provided integrally with the stationary portion so that rotation thereof is restricted.

The shape of the pressed member 2 is not limited as long as the pressed member 2 is configured to have the pressed surface 7 on the inner circumferential surface thereof. The pressed surface 7 has a circular shape when viewed from the axial direction, and although not limited to this, in the present example, has a shape of a cylindrical surface having an inner diameter that does not change in the axial direction.

In the present example, the pressed member 2 includes a housing element 8. The housing element 8 is an element for incorporating the pressed member 2 into a mechanical element to which the reverse-input blocking clutch 1 is applied.

The housing element 8 has an inner circumferential surface having a shape of a stepped cylindrical surface. Specifically, the inner circumferential surface of the housing element 8 is formed by connecting a large-diameter cylindrical surface portion 9 on the first side in the axial direction and a small-diameter cylindrical surface portion 10 on the second side in the axial direction by a connecting surface portion 11 facing the first side in the axial direction. In the present example, the pressed surface 7 is constituted by the large-diameter cylindrical surface portion 9.

The housing element 8 has an inward flange portion 12 that protrudes toward the inner side in the radial direction at an end portion on the first side in the axial direction of the small-diameter cylindrical surface portion 10, and has screw holes 13 that open at a plurality of locations in the circumferential direction on a side surface on the second side in the axial direction.

The pressed member 2 can additionally include another housing element that closes an opening portion on the first side in the axial direction of the housing element 8. In this case, the pressed member 2 is configured by connecting the housing element 8 and the other housing element to each other by connecting members such as bolts in a state where the housing element 8 and the other housing element are positioned in the radial direction by fitting the other housing element to an end portion on the first side in the axial direction of the housing element 8 without looseness (by spigot fitting).

### [Input Member]

The input member 3 has an input-side engaging portion 14 arranged on the inner side in the radial direction of the pressed surface 7 and is arranged so as to be coaxial with the pressed surface 7.

The input member 3 is connected to an input-side mechanism such as an electric motor on the first side in the axial direction, and rotational torque is input thereto. Specifically, the input member 3 is composed of an output shaft of the input-side mechanism, or is composed as a separate member from the output shaft or the like and can be coaxially fixed to the output shaft or the like.

The input-side engaging portion 14 is provided at a portion shifted to the outside in the radial direction from a central axis of rotation of the input member 3 and has a portion that engages, specifically contacts, an input-side engaged portion 42 of the engaging element 5. The input-side engaging portion 14 is configured so that an inner-side surface 16 in the radial direction thereof engages with an inner-side surface 44 in the radial direction of the input-side engaged portion 42 as the input member 3 or the engaging element 5 rotates.

In the present example, the input member 3 has an input shaft portion 15 and an input flange portion 17 in addition to the input-side engaging portion 14.

The input shaft portion 15 is an element for connecting the input-side mechanism and the input member 3 so as to be capable of transmitting rotational torque. In the present example, the input shaft portion 15 has a cylindrical shape. The input member 3 is connected to the output shaft of the input-side mechanism so as to be capable of transmitting torque by causing the inner circumferential surface of the input shaft portion 15 and the outer circumferential surface of the output shaft of the input-side mechanism such as an electric motor to engage in a non-circular engagement such as spline engagement, or is connected to the output shaft of the input-side mechanism so as to be capable of transmitting torque by press-fitting.

The input flange portion 17 is an element for arranging the input-side engaging portion 14 at a portion shifted to the outside in the radial direction from the center of rotation of the input member 3. In the present example, the input flange portion 17 protrudes over the entire circumference toward the outer side in the radial direction from the outer circumferential surface of an end portion on the second side in the axial direction of the input shaft portion 15.

The input-side engaging portion 14 is an element that engages with the input-side engaged portion 42 of the engaging element 5 when rotational torque is input to the input member 3 and rotates the engaging element 5 in the same direction as the input torque. In the present example, the input-side engaging portion 14 protrudes toward the second side in the axial direction from a portion of a side surface on the second side in the axial direction of the input flange portion 17 that is shifted to the outside in the radial direction from the center of rotation.

The shape of the input-side engaging portion 14 is not limited as long as it is configured so as to be able to engage with the input-side engaged portion 42 of the engaging element 5.

For example, the input-side engaging portion 14 can have an end surface shape that is symmetrical with respect to the circumferential direction or can have an end surface shape that is asymmetrical with respect to the circumferential direction. In the present example, the input-side engaging portion 14 has an end surface shape that is symmetrical with respect to the circumferential direction.

For example, the input-side engaging portion 14 can have an end surface shape of a partially annular shape, a substantially trapezoidal shape, or a shape similar thereto, in which a length in the second direction increases as going toward the outer side in the first direction when viewed from the axial direction. In the present example, the input-side engaging portion 14 has an end surface shape similar to a substantially trapezoidal shape, and of the inner-side surface 16 in the radial direction of the input-side engaging portion 14, a middle portion in the second direction is composed of a flat surface perpendicular to a straight line connecting a central axis O of the input member 3 and a center of the input-side engaging portion 14 when viewed from the axial direction, and portions on both sides in the second direction are composed of partially cylindrical convex surfaces inclined in a direction toward the outer side in the first direction as going toward both sides in the second direction. An outer-side surface 18 in the radial direction of the input-side engaging portion 14 is composed of a partially cylindrical convex surface centered on the central axis O.

The number of the input-side engaging portion 14 is determined in accordance with the number of the engaging element 5, and when the engaging element 5 is composed of a plurality of engaging elements 5, the input-side engaging portion 14 is also composed of a plurality of input-side engaging portions 14.

In the present example, the engaging element 5 is composed of two engaging elements 5. Therefore, the input-side engaging portion 14 is composed of two input-side engaging portions 14 in accordance with the number of the engaging element 5. The two input-side engaging portions 14 are arranged at two locations on opposite sides in the radial direction of the side surface on the second side in the axial direction of the input flange portion 17, and are separated from each other with respect to the radial direction of the input member 3.

The input member 3 can be rotatably supported by the pressed member 2 or the other housing element.

### [Output Member]

The output member 4 has an output-side engaging portion 19 arranged further on the inner side in the radial direction than the input-side engaging portion 14 and is arranged so as to be coaxial with the pressed surface 7. That is, the output member 4 is also arranged so as to be coaxial with the input member 3.

The output member 4 is connected to an output-side mechanism such as a speed-reducing mechanism on the second side in the axial direction and is configured to output rotational torque to the output-side mechanism as the output member 4 rotates. Specifically, the output member 4 is composed of an input shaft or the like of the output-side mechanism or is composed as a separate member from the input shaft or the like and can be coaxially fixed to the input shaft or the like. In the present example, the output member 4 is coaxially fixed to a drive pulley 38, which is an input shaft of a speed reducer 37. A toothed belt 71 is stretched between the drive pulley 38 and a driven pulley (not illustrated).

The output member 4 has a mounting shaft portion 20 and an output shaft portion 21 in addition to the output-side engaging portion 19.

The output-side engaging portion 19, the mounting shaft portion 20, and the output shaft portion 21 are arranged from the first side in the axial direction in the order of the mounting shaft portion 20, the output-side engaging portion 19, and the output shaft portion 21. In the present example, the mounting shaft portion 20 and the output-side engaging portion 19, and the output-side engaging portion 19 and the output shaft portion 21, are directly connected to each other in the axial direction.

The output-side engaging portion 19 has a portion that engages with an output-side engaged portion 43 of the engaging element 5 and is an element that receives rotational torque from the engaging element 5 when rotational torque is input to the input member 3 and the engaging element 5 rotates. Further, the output-side engaging portion 19 is an element that engages with the output-side engaged portion 43 of the engaging element 5 and rotates the engaging element 5 in the same direction as reverse input torque when rotational torque is reversely input to the output member 4.

Of the output-side engaging portion 19, the portion that engages with the output-side engaged portion 43 of the engaging element 5 is arranged at a position that is further on the inner side in the radial direction than the input-side engaging portion 14 and is shifted to the outside in the radial direction from the central axis O of rotation of the output member 4 so as to be capable of engaging with the output-side engaged portion 43 of the engaging element 5. The output-side engaging portion 19 is configured so that the outer circumferential surface thereof engages or comes into contact with the output-side engaged portion 43 as the output member 4 or the engaging element 5 rotates.

The output-side engaging portion 19 has a cam function. A distance from the central axis of rotation of the output member 4 to an outer circumferential surface of the output-side engaging portion 19, which is a portion that engages with the output-side engaged portion 43, is not constant with respect to the circumferential direction.

The number of the portion of the output-side engaging portion 19 that engages with the output-side engaged portion 43 is determined in accordance with the number of the engaging element 5. When the engaging element 5 is composed of a plurality of engaging elements 5, the output-side engaging portion 19 is also configured to have a plurality of portions each of which engages with the output-side engaged portion 43 of each of the engaging elements 5. In the present example, the output-side engaging portion 19 is configured to have two portions each of which engages with the output-side engaged portion 43 in accordance with the number of the engaging elements 5. However, even when the number of the engaging elements 5 is one, it is possible to adopt a structure similar to that of the present example.

A cross-sectional shape of the output-side engaging portion 19 when cut by an imaginary plane perpendicular to the central axis O of rotation of the output member 4 is arbitrary as long as the output-side engaging portion 19 has a cam function, and can be, for example, a quadrilateral shape such as a square, a rectangle, a parallelogram, or a trapezoid, an oval shape, or a shape similar thereto.

In the present example, the output-side engaging portion 19 has a substantially rectangular cross-sectional shape as illustrated in FIG. 7 when cut by an imaginary plane perpendicular to the central axis O of rotation of the output member 4. More specifically, the outer circumferential surface of the output-side engaging portion 19 is composed of two flat surfaces 22 that are parallel to each other and two convex curved surfaces 23 each having a partially cylindrical surface shape.

In the present example, the output-side engaging portion 19 is plane-symmetrical with respect to an imaginary plane that passes through the central axis O of rotation of the output member 4 and is perpendicular to the two flat surfaces 22. Further, the output-side engaging portion 19 is plane-symmetrical with respect to an imaginary plane that passes through the central axis O of rotation of the output member 4 and is parallel to the two flat surfaces 22. That is, the output-side engaging portion 19 has a shape with two-fold rotational symmetry about the central axis of the output member 4. The output-side engaging portion 19 is arranged on the inner side in the radial direction of the two input-side engaging portions 14, between the output-side engaged portions 43 of the two engaging elements 5, and passes through a through hole 62 of a spacer 59.

An end surface 24 on the first side in the axial direction of the output-side engaging portion 19 is composed of a flat surface perpendicular to the central axis of the output member 4. Further, the end surface 24 on the first side in the axial direction of the output-side engaging portion 19 is located further to the first side in the axial direction than an end surface 49 on the first side in the axial direction of the engaging element 5. Therefore, the output-side engaging portion 19 protrudes toward the first side in the axial direction relative to the engaging element 5.

The mounting shaft portion 20 is an element to which the stopper member 6 is crimped and fixed.

The mounting shaft portion 20 protrudes toward the first side in the axial direction from the end surface 24 on the first side in the axial direction of the output-side engaging portion 19.

In the present example, the mounting shaft portion 20 is provided at an end portion on the first side in the axial direction of the output member 4. However, the output member 4 can also include, further on the first side in the axial direction than the mounting shaft portion 20, for example, a shaft portion that is inserted into an inner side of the input shaft portion 15 so as to improve coaxiality between the output member 4 and the input member 3.

The shape of the mounting shaft portion 20 is not limited as long as it is configured such that the stopper member 6 is crimped and fixed thereto. Specifically, the mounting shaft portion 20 can have any shape such as a cylindrical shape, a tapered conical shape, an oval columnar shape, an elliptical columnar shape, or a prismatic shape such as a rectangular columnar shape.

The shape of the mounting shaft portion 20 is preferably a shape that allows a diameter of a cylindrical portion 52 of the stopper member 6 fitted onto the mounting shaft portion 20 to be increased, from a viewpoint of increasing a contact area with a crimped portion 51 of the stopper member 6 and more effectively preventing the stopper member 6 from coming off. In the present example, the end surface 24 on the first side in the axial direction of the output-side engaging portion 19 has a substantially rectangular end surface shape in which a dimension in the second direction is larger than a dimension in the first direction. Therefore, from a viewpoint of increasing the diameter of the cylindrical portion 52 of the stopper member 6 fitted onto the mounting shaft portion 20, the mounting shaft portion 20 is preferably configured to have a non-cylindrical shape having a cross-sectional shape in which a dimension in the second direction is larger than a dimension in the first direction.

Specifically, the mounting shaft portion 20 can have any shape such as a polygonal shape such as a prismatic shape, an oval columnar shape, an elliptical columnar shape, or a shape similar thereto, each having a cross-sectional shape in which a dimension in the second direction is larger than a dimension in the first direction. In this case, the cross-sectional shape of the mounting shaft portion 20 is more preferably the same shape as or a shape similar to the end surface 24 on the first side in the axial direction of the output-side engaging portion 19.

Further, the shape of the mounting shaft portion 20 is preferably a rotationally symmetrical shape about the central axis of the output member 4 from a viewpoint of ensuring rotational balance of the output member 4.

In the present example, the mounting shaft portion 20 has a non-cylindrical shape. Specifically, the mounting shaft portion 20 has a substantially prismatic shape in which a dimension in the second direction is larger than a dimension in the first direction, and has a cross-sectional shape similar to a shape of the end surface 24 of the output-side engaging portion 19, that is, a substantially rectangular cross-sectional shape. More specifically, the mounting shaft portion 20 has a cross-sectional shape in which a dimension in the first direction is the same as a dimension in the first direction of the end surface 24 of the output-side engaging portion 19 and a dimension in the second direction is shorter than a dimension in the second direction of the end surface 24 of the output-side engaging portion 19. The outer circumferential surface of the mounting shaft portion 20 is composed of two flat surfaces 25 arranged parallel to each other and two convex curved surfaces 26 each having a partially cylindrical surface shape.

Further, the mounting shaft portion 20 has a rotationally symmetrical shape about the central axis of the output member 4, specifically, a two-fold rotationally symmetrical shape. The mounting shaft portion 20 may have a cross-sectional shape other than a substantially rectangular shape among shapes similar to the shape of the end surface 24 of the output-side engaging portion 19, such as an oval shape or an elliptical shape, in which a dimension in the second direction is larger than a dimension in the first direction.

The flat surface 25 of the mounting shaft portion 20 is arranged on the same plane as the flat surface 22 of the output-side engaging portion 19.

The convex curved surface 26 of the mounting shaft portion 20 is provided at a portion where a phase in the circumferential direction coincides with that of the convex curved surface 23 of the output-side engaging portion 19. However, the convex curved surface 26 of the mounting shaft portion 20 is located further on the inner side in the radial direction than the convex curved surface 23 of the output-side engaging portion 19. A radius of curvature of the convex curved surface 26 of the mounting shaft portion 20 is smaller than a radius of curvature of the convex curved surface 23 of the output-side engaging portion 19. An end portion on the first side in the axial direction of the convex curved surface 23 of the output-side engaging portion 19 and an end portion on the second side in the axial direction of the convex curved surface 26 of the mounting shaft portion 20 are connected by the end surface 24 on the first side in the axial direction of the output-side engaging portion 19. A diameter of a circumscribed circle of the mounting shaft portion 20 is the same as an inner diameter of the cylindrical portion 52 of the stopper member 6 or is slightly smaller than the inner diameter of the cylindrical portion 52. The circumscribed circle of the mounting shaft portion 20 refers to an imaginary circle centered on the central axis of the output member 4 and passing through the two convex curved surfaces 26 of the mounting shaft portion 20.

In the present example, the mounting shaft portion 20 has a non-cylindrical shape and has a cross-sectional shape similar to that of the output-side engaging portion 19. Accordingly, since a diameter of the cylindrical portion 52 fitted onto the mounting shaft portion 20 can be increased, a contact area between the outer circumferential surface of the mounting shaft portion 20 and the crimped portion 51 can be increased. Therefore, the stopper member 6 can be more effectively prevented from coming off.

Even when the mounting shaft portion 20 does not include an engaging surface 27 that faces the second side in the axial direction on the outer circumferential surface, the stopper member 6 is prevented from moving toward the first side in the axial direction by the crimped portion 51 strongly pressing the outer circumferential surface of the mounting shaft portion 20. In order to more effectively prevent the stopper member 6 from coming off, the mounting shaft portion 20 preferably includes, on at least a part of the outer circumferential surface, the engaging surface 27 that faces the second side in the axial direction and engages with the crimped portion 51 of the stopper member 6 in the axial direction. Accordingly, movement of the stopper member 6 toward the first side in the axial direction is reliably prevented.

The engaging surface 27 is arbitrary as long as it can engage with the crimped portion 51 of the stopper member 6 in the axial direction, and can be composed of, for example, an inner surface 29 of a recessed portion 28, a stepped surface, or a side surface of a protruding portion. The engaging surface 27 can be composed of a flat surface or can be composed of a curved surface. When the engaging surface 27 is composed of a flat surface, the engaging surface 27 can be composed of a surface perpendicular to the central axis of the output member 4 or can be composed of a surface inclined with respect to the perpendicular surface. When the engaging surface 27 is composed of a surface inclined with respect to the perpendicular surface, from a viewpoint of effectively preventing the stopper member 6 from coming off, an inclination angle with respect to the perpendicular surface is preferably small.

The number and arrangement position of the engaging surface 27 provided on the outer circumferential surface of the mounting shaft portion 20 are arbitrary. When the engaging surface 27 is arranged at a plurality of locations, the engaging surfaces 27 may be arranged separated from each other in the circumferential direction or may be arranged separated from each other in the axial direction.

When the engaging surface 27 is composed of the inner surface 29 of the recessed portion 28, the recessed portion 28 is provided at one location or a plurality of locations on the outer circumferential surface of the mounting shaft portion 20. When the recessed portion 28 is provided at one location on the outer circumferential surface of the mounting shaft portion 20, the recessed portion 28 can be provided over an entire circumference of the outer circumferential surface of the mounting shaft portion 20 or can be provided on a part thereof in the circumferential direction. When the recessed portion 28 is provided at a plurality of locations on the outer circumferential surface of the mounting shaft portion 20, the recessed portion 28 can be provided at a plurality of locations in the circumferential direction at one location in the axial direction of the outer circumferential surface of the mounting shaft portion 20 or can be provided on a part in the circumferential direction at a plurality of locations in the axial direction of the outer circumferential surface of the mounting shaft portion 20.

For example, when the mounting shaft portion 20 includes two flat surfaces 25 and two convex curved surfaces 26, the recessed portion 28 can be provided on the flat surfaces 25 or can be provided on the convex curved surfaces 26. When the recessed portion 28 is provided at a plurality of locations on the outer circumferential surface of the mounting shaft portion 20, the recessed portion 28 can be provided on the two convex curved surfaces 26 or can be provided on the two flat surfaces 25, or can be provided on both the flat surfaces 25 and the convex curved surfaces 26. The recessed portion 28 is provided in a state of being divided in the circumferential direction by the convex curved surfaces 26.

As a shape of the recessed portion 28, for example, a groove shape or a hole shape can be adopted. When the recessed portion 28 is configured to have a groove shape, the recessed portion 28 can extend in the circumferential direction or can extend in the axial direction. A cross-sectional shape of the inner surface 29 of the recessed portion 28 is arbitrary as long as the engaging surface 27 is constituted by at least a part thereof, and can be configured to have a substantially L-shape, a substantially V-shape, a substantially U-shape, a substantially C-shape, or the like.

The mounting shaft portion 20 can include, instead of the engaging surface 27 or in addition to the engaging surface 27, another engaging surface that can engage with the crimped portion 51 of the stopper member 6 in the circumferential direction.

In the present example, the engaging surface 27 is composed of an inner surface 29 that faces the second side in the axial direction of a recessed portion 28 formed on the outer circumferential surface of the mounting shaft portion 20. The recessed portions 28 is provided at each of two locations on opposite sides in the diametrical direction of the outer circumferential surface of the mounting shaft portion 20. Specifically, the recessed portions 28 are provided on two convex curved surfaces 26 arranged on opposite sides in the diametrical direction of the outer circumferential surface of the mounting shaft portion 20.

The recessed portion 28 is provided on a part in the axial direction of the convex curved surface 26. Specifically, the recessed portion 28 is provided at a middle portion in the axial direction of the convex curved surface 26.

The recessed portion 28 has a groove shape extending in the circumferential direction and is provided over an entire circumference at the middle portion in the axial direction of the convex curved surface 26.

In the present example, the inner surface 29 of the recessed portion 28 has a substantially L-shaped cross-sectional shape. Specifically, the inner surface 29 of the recessed portion 28 is composed of a first inclined surface 30 and a second inclined surface 31 having inclination angles different from each other with respect to the central axis of the output member 4.

The first inclined surface 30 is arranged over a range from an end portion on the second side in the axial direction to a middle portion in the axial direction of the inner surface 29 and is gently inclined toward the inner side in the radial direction as going toward the first side in the axial direction. An inclination angle of the first inclined surface 30 with respect to the central axis of the output member 4 is not limited to this, but is, for example, about 15 degrees or more and 45 degrees or less, and is about 30 degrees in the illustrated example.

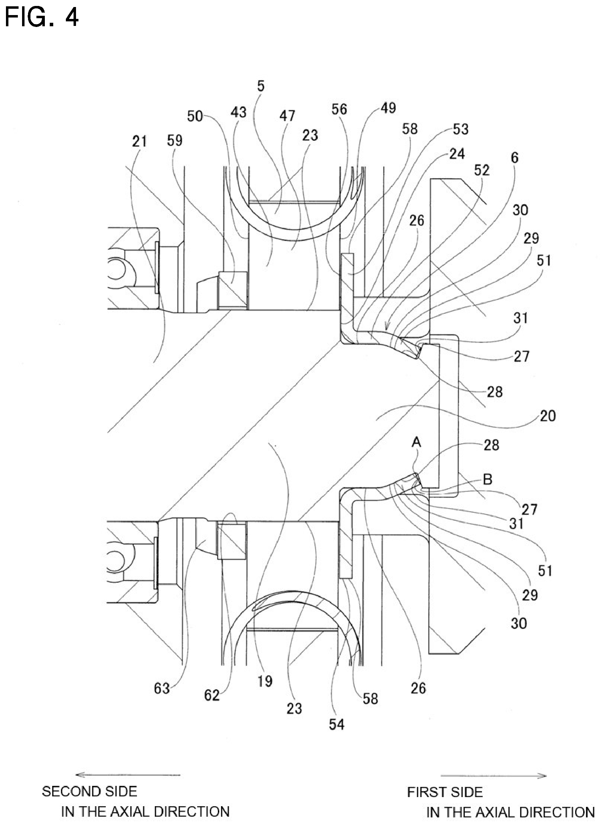

The second inclined surface 31 is arranged at an end portion on the first side in the axial direction of the inner surface 29 and is largely inclined toward the outer side in the radial direction as going toward the first side in the axial direction. An inclination angle of the second inclined surface 31 with respect to the central axis of the output member 4 is not limited to this, but is, for example, about 55 degrees or more and 85 degrees or less, and is about 70 degrees in the illustrated example. In the present example, a position of an opening edge portion on the first side in the axial direction of the recessed portion 28 is devised so that an edge on the inner side in the radial direction of an end portion on the first side in the axial direction of a partially cylindrical portion 67 that becomes the crimped portion 51 (see point A in FIG. 4) does not catch on the opening edge portion on the first side in the axial direction of the recessed portion 28 (see point B in FIG. 4) in a process of forming the crimped portion 51 of the stopper member 6.

In the present example, of the inner surface 29, the second inclined surface 31 constitutes the engaging surface 27. The second inclined surface 31 constituting the engaging surface 27 engages with the crimped portion 51 in the axial direction to reliably prevent the stopper member 6 from moving toward the first side in the axial direction and to effectively prevent the stopper member 6 from coming off.

Further, since the engaging surface 27 is composed of the inner surface 29 of the recessed portion 28 provided on the outer circumferential surface of the mounting shaft portion 20, the engaging surface 27 can be easily machined and machining cost can be reduced.

The output shaft portion 21 is an element for connecting the output member 4 and an input portion of the output-side mechanism so as to be capable of transmitting rotational torque.

The output shaft portion 21 is arranged so as to be coaxial with the output-side engaging portion 19, and the output-side engaging portion 19 protrudes toward the first side in the axial direction from a central portion of an end surface 32 on the first side in the axial direction of the output shaft portion 21. The end surface 32 on the first side in the axial direction of the output shaft portion 21 is composed of a flat surface perpendicular to the central axis of the output member 4.

In the present example, the output shaft portion 21 has a stepped columnar shape. Specifically, the output shaft portion 21 has, in order from the first side in the axial direction, a large diameter portion 33, a medium diameter portion 34, and a small diameter portion 35. The large diameter portion 33 includes a flange portion 36 that protrudes over the entire circumference toward the outer side in the radial direction at a middle portion in the axial direction of an outer circumferential surface thereof. In the present example, a drive pulley 38 of a speed reducer 37 is fitted and fixed to the medium diameter portion 34.

In the present example, the large diameter portion 33 of the output shaft portion 21 is rotatably supported by the pressed member 2. Specifically, the large diameter portion 33 of the output shaft portion 21 is rotatably supported with respect to the pressed member 2 by a radial rolling bearing 39a. The radial rolling bearing 39a is held in the axial direction between the flange portion 36 provided on the outer circumferential surface of the large diameter portion 33 and the inward flange portion 12 provided on the inner circumferential surface of the pressed member 2.

In the present example, the output member 4 has a corner R portion 40 having a concave arc-shaped cross section at a connecting portion between the end surface 32 on the first side in the axial direction of the output shaft portion 21 and the outer circumferential surface of the output-side engaging portion 19. The corner R portion 40 relieves stress acting on the connecting portion between the end surface 32 on the first side in the axial direction of the output shaft portion 21 and the outer circumferential surface of the output-side engaging portion 19.

### [Engaging Element]

The engaging element 5 has a pressing surface 41 facing the pressed surface 7, an input-side engaged portion 42 capable of engaging with the input-side engaging portion 14, and an output-side engaged portion 43 capable of engaging with the output-side engaging portion 19, and is arranged so as to be able to move in the first direction that is a direction toward and away from the pressed surface 7.

The engaging element 5 is configured such that, when rotational torque is input to the input member 3, the engaging element 5 moves in a direction away from the pressed surface 7 with respect to the first direction based on the input-side engaging portion 14 engaging with the input-side engaged portion 42, and transmits rotational torque input to the input member 3 to the output member 4 by causing the output-side engaged portion 43 to engage with the output-side engaging portion 19, whereas when rotational torque is reversely input to the output member 4, the engaging element 5 presses the pressing surface 41 against the pressed surface 7 based on the output-side engaging portion 19 engaging with the output-side engaged portion 43 so as to frictionally engage the pressing surface 41 with the pressed surface 7.

As long as the engaging element 5 has such a configuration, it can be composed of two engaging elements 5, or can be composed of three or more engaging elements 5.

The engaging element 5 can be manufactured by any method. For example, the engaging element 5 can be manufactured by press punching process; sintering process; forging process; casting process; cutting process; any combination thereof, or the like. In the present example, the engaging element 5 is a press-formed product of a metal plate manufactured by press punching process.

The shape of the engaging element 5 is not limited as long as the pressing surface 41, the input-side engaged portion 42, and the output-side engaged portion 43 are provided and the above-described functions can be achieved, and a conventional shape of the engaging element can be widely adopted.

In the present example, the engaging element 5 is composed of two engaging elements 5. Each of the engaging elements 5 has a function as the engaging element 5. Each of the engaging elements 5 has a substantially semicircular end surface shape when viewed from the axial direction and has a shape that is symmetrical with respect to the width direction. In the following, a configuration of each of the engaging elements 5 will be described.

The pressing surface 41 is provided on an outer-side surface in the radial direction of the engaging element 5 that faces the pressed surface 7. The shape and the size of the pressing surface 41 are not limited as long as the pressing surface 41 can be frictionally engaged with the pressed surface 7. The pressing surface 41 can be composed of an entire outer-side surface in the radial direction of the engaging element 5, or can be composed of a part thereof. One pressing surface 41 may be provided for one engaging element 5, or a plurality of pressing surfaces 41 may be provided. A radius of curvature of the pressing surface 41 may be the same as a radius of curvature of the pressed surface 7, or may be smaller than the radius of curvature of the pressed surface 7.

In the present example, the pressing surface 41 is composed of two pressing surfaces 41 provided at two locations separated from each other in the circumferential direction on the outer-side surface in the radial direction of the engaging element 5. Each pressing surface 41 is composed of a partially cylindrical surface shaped convex curved surface having a radius of curvature smaller than the radius of curvature of the pressed surface 7.

Of the outer-side surface in the radial direction of the engaging element 5, a portion shifted from the two pressing surfaces 41 in the circumferential direction is located further to the inner side in the radial direction than a circumscribed circle that is centered on the central axis O of the input member 3 and is in contact with the two pressing surfaces 41, when viewed from the axial direction. That is, in a state where the two pressing surfaces 41 are in contact with the pressed surface 7, the portion shifted from the two pressing surfaces 41 in the circumferential direction does not come into contact with the pressed surface 7.

The pressing surface 41 preferably has a surface property with a friction coefficient with respect to the pressed surface 7 that is greater than that of other portions of the engaging element 5. Further, the pressing surface 41 can be formed integrally with other portions of the engaging element 5, or can be formed by a surface of a friction material fixed to other portions of the engaging element 5 by adhesion or the like.

The input-side engaged portion 42 is an element that engages with the input-side engaging portion 14 as the input member 3 rotates and receives rotational torque input from the input member 3. The shape of the input-side engaged portion 42 is not limited as long as the input-side engaged portion 42 is configured so as to be capable of engaging with the input-side engaging portion 14.

In the present example, the input-side engaged portion 42 is provided at a middle portion in the radial direction of a central portion in the width direction of the engaging element 5. More specifically, the input-side engaged portion 42 is composed of a penetrating hole that penetrates in the axial direction the middle portion in the radial direction of the central portion in the width direction of the engaging element 5.

The input-side engaged portion 42 has a size that allows the input-side engaging portion 14 to be loosely inserted. Therefore, in a state where the input-side engaging portion 14 is inserted inside the input-side engaged portion 42, a gap exists between the input-side engaging portion 14 and an inner surface of the input-side engaged portion 42 in each of the width direction and the radial direction of the engaging element 5. For this reason, the input-side engaging portion 14 is capable of displacement in the rotational direction of the input member 3 with respect to the input-side engaged portion 42, and the input-side engaged portion 42 is capable of displacement in the radial direction of the engaging element 5 with respect to the input-side engaging portion 14.

In the present example, of the inner surface of the input-side engaged portion 42, an inner-side surface 44 in the radial direction facing toward the outer side in the radial direction is composed of a flat surface perpendicular to the first direction, and an outer-side surface 45 in the radial direction facing toward the inner side in the radial direction is composed of a curved surface having a substantially arc-shaped contour shape or a composite surface having a substantially V-shaped contour shape when viewed from the axial direction. A side surface 46 in the circumferential direction that connects end portions on both sides in the second direction of the inner-side surface 44 in the radial direction and end portions on both sides in the second direction of the outer-side surface 45 in the radial direction is composed of a concave curved surface having a partially cylindrical surface shape.

The output-side engaged portion 43 is an element that engages with the output-side engaging portion 19 as the engaging element 5 rotates and outputs rotational torque input from the input member 3 to the output member 4. The shape of the output-side engaged portion 43 is not limited as long as the output-side engaged portion 43 is configured so as to be capable of engaging with the output-side engaging portion 19. In the present example, the output-side engaged portion 43 is provided at a central portion in the width direction of an inner-side surface in the radial direction of the engaging element 5.

In the present example, the engaging element 5 has a flat surface portion 47 on the inner-side surface in the radial direction, the flat surface portion 47 being perpendicular to the radial direction of the engaging element 5, and has two protruding portions 48 that protrude toward the inner side in the radial direction at two locations of the flat surface portion 47 in the width direction of the engaging element 5. The output-side engaged portion 43 is composed of a portion existing between the two protruding portions 48 of the flat surface portion 47 in the width direction. In the present example, a dimension in the width direction of the output-side engaged portion 43, that is, a distance between the two protruding portions 48, is larger than a dimension in the width direction of the flat surface 22 of the output-side engaging portion 19.

In the reverse-input blocking clutch 1 of the present example, each of the two engaging elements 5 is arranged on the inner side in the radial direction of the housing element 8 so as to be able to move in the first direction, in a state where the pressing surfaces 41 of the two engaging elements 5 face opposite sides from each other with respect to the radial direction and the flat surface portions 47 face each other. Further, the two input-side engaging portions 14 of the input member 3 arranged on the first side in the axial direction are inserted in the axial direction into the input-side engaged portions 42 of the two engaging elements 5, and the output-side engaging portion 19 of the output member 4 arranged on the second side in the axial direction is inserted in the axial direction between the output-side engaged portions 43 of the two engaging elements 5. That is, the two engaging elements 5 are arranged such that the output-side engaging portion 19 is held from the outside in the radial direction by the output-side engaged portions 43.

An inner diameter dimension of the pressed surface 7 and a dimension in the radial direction of the engaging element 5 are regulated such that, in a state where the two engaging elements 5 are arranged on the inner side in the radial direction of the pressed member 2, a gap exists in at least one of a portion between the pressed surface 7 and the two pressing surfaces 41 and a portion between tip end surfaces of each of two combinations of the protruding portions 48 that are composed by the two protruding portions 48 of the two engaging elements facing each other.

In the present example, the engaging element 5 has a constant dimension in the axial direction over the radial direction. An end surface 49 on the first side in the axial direction and an end surface 50 on the second side in the axial direction of the engaging element 5 are arranged parallel to each other and are each formed as a flat surface.

### [Stopper Member]

The stopper member 6 regulates axial movement of the engaging element 5 with respect to the output member 4. Specifically, the stopper member 6 positions the engaging element 5 appropriately in the axial direction and prevents the engaging element 5 from moving toward the first side in the axial direction with respect to the output member 4.

The stopper member 6 has a cylindrical portion 52 fitted onto the mounting shaft portion 20, a flange portion 53 connected to the second side in the axial direction of the cylindrical portion 52 and facing an end surface 49 on the first side in the axial direction of the engaging element 5 in the axial direction, and a crimped portion 51 formed on at least a part of the cylindrical portion 52 or connected to at least a part in the circumferential direction of an end portion on the first side in the axial direction of the cylindrical portion 52, and is crimped and fixed to the mounting shaft portion 20.

Since the crimped portion 51 is formed on a part of the stopper member 6, the stopper member 6 is made of metal, preferably a metal having excellent workability such as mild steel. The stopper member 6 is manufactured, for example, by performing press working on a material such as SPHC (hot-rolled steel sheet).

The stopper member 6 may be configured so as not to be able to relatively rotate with respect to the mounting shaft portion 20, or may be configured so as to be able to relatively rotate. In order to prevent relative rotation of the stopper member 6 with respect to the mounting shaft portion 20, for example, relative rotation of the stopper member 6 with respect to the mounting shaft portion 20 can be prevented by using the crimped portion 51, the cylindrical portion 52, the flange portion 53, any combination of these, or the like.

In the present example, relative rotation of the stopper member 6 with respect to the mounting shaft portion 20 is prevented by using the flange portion 53.

The stopper member 6 is preferably positioned in the axial direction with respect to the output member 4 such that a gap is ensured between the end surface 49 on the first side in the axial direction of the engaging element 5 and a side surface 56 on the second side in the axial direction of the flange portion 53.

In the present example, the stopper member 6 is positioned in the axial direction with respect to the output member 4 by bringing a part thereof into contact with the end surface 24 on the first side in the axial direction of the output-side engaging portion 19. Specifically, the stopper member 6 is positioned in the axial direction with respect to the output member 4 by bringing a portion on the inner side in the radial direction of the side surface 56 on the second side in the axial direction of the flange portion 53 into contact with the end surface 24 on the first side in the axial direction of the output-side engaging portion 19. As a result, a gap in the axial direction is provided between the end surface 49 on the first side in the axial direction of the engaging element 5 and the side surface 56 on the second side in the axial direction of the flange portion 53.

In the present example, since the stopper member 6 is positioned in the axial direction with respect to the output member 4 by bringing the stopper member 6 into contact with the end surface 24 on the first side in the axial direction of the output-side engaging portion 19, the position in the axial direction of the stopper member 6 can be accurately regulated. Therefore, the position in the axial direction of the engaging element 5 can be accurately regulated. Further, since a gap in the axial direction can be provided between the end surface 49 on the first side in the axial direction of the engaging element 5 and the side surface 56 on the second side in the axial direction of the flange portion 53, it is possible to prevent the flange portion 53 from becoming resistance when the engaging element 5 moves in the radial direction.

The shape of the cylindrical portion 52 is not limited as long as the cylindrical portion 52 is configured so as to be able to be fitted onto the mounting shaft portion 20. The cylindrical portion 52 may have any shape such as a cylindrical shape, an elliptical cylindrical shape, an oval cylindrical shape, a tapered cylindrical shape, or a polygonal cylindrical shape.

The shape of the inner circumferential surface of the cylindrical portion 52 is preferably a shape such that the cylindrical portion 52 can be fitted onto the mounting shaft portion 20 without looseness in the radial direction.

The shape of the inner circumferential surface of the cylindrical portion 52 may match the shape of the outer circumferential surface of the mounting shaft portion 20, however, as long as the cylindrical portion 52 can be fitted onto the mounting shaft portion 20 without looseness in the radial direction, the shape of the inner circumferential surface of the cylindrical portion 52 does not have to match the shape of the outer circumferential surface of the mounting shaft portion 20.

In the present example, the cylindrical portion 52 is entirely formed in a cylindrical shape, and the inner circumferential surface thereof is formed as a cylindrical surface. Therefore, the shape of the inner circumferential surface of the cylindrical portion 52 does not match the shape of the outer circumferential surface of the mounting shaft portion 20.

An inner diameter of the cylindrical portion 52 is the same as a diameter of a circumscribed circle of the mounting shaft portion 20 or is slightly larger than the diameter. Therefore, the cylindrical portion 52 is prevented from rattling in the radial direction with respect to the mounting shaft portion 20 by two locations in the circumferential direction of the inner circumferential surface that face the convex curved surfaces 26 in the radial direction. A gap having a substantially arc shape or a substantially annular shape when viewed from the axial direction is formed between the inner circumferential surface of the cylindrical portion 52 and the flat surfaces 25 of the mounting shaft portion 20.

A dimension in the axial direction of the cylindrical portion 52 is slightly smaller than a dimension in the axial direction of the mounting shaft portion 20.

The crimped portion 51 is an element for crimping and fixing the stopper member 6 to the mounting shaft portion 20.

The crimped portion 51 refers to a portion that is plastically deformed using a jig or a tool, and the shape thereof is not limited as long as the crimped portion 51 is configured so as to be able to crimp and fix the stopper member 6 to the mounting shaft portion 20. The crimped portion 51 may have any shape such as a protrusion piece shape, an annular shape, or a projection shape.

The crimped portion 51 is formed by performing crimping process on a part of the cylindrical portion 52, a portion extending from a part in the circumferential direction of an end portion on the first side in the axial direction of the cylindrical portion 52, or the end portion itself on the first side in the axial direction of the cylindrical portion 52, in a state before crimping process.

The shape of the crimped portion 51 is preferably configured as a protrusion piece shape from a viewpoint of reducing a press load required for the crimping process. When the crimped portion 51 is configured as a protrusion piece shape extending in the axial direction, the crimped portion 51 is obtained, for example, by performing a crimping process on a claw portion 55 extending in the axial direction from a part in the circumferential direction of an end portion on the first side in the axial direction of the cylindrical portion in a state before the crimping process. When the crimped portion 51 is configured as a protrusion piece shape extending in the circumferential direction, the crimped portion 51 is obtained, for example, by performing a crimping process on a portion extending in the circumferential direction formed by forming a substantially U-shaped slit in a middle portion in the axial direction of the cylindrical portion, or a portion extending in the circumferential direction from a part in the circumferential direction of an end portion on the first side in the axial direction of the cylindrical portion, in a state before the crimping process.

The shape of the crimped portion 51 is preferably configured as an annular shape continuous in the circumferential direction from a viewpoint of preventing disengagement from engaging surfaces 27 arranged separated from each other in the circumferential direction even when the stopper member 6 relatively rotates with respect to the mounting shaft portion 20. In this case, the crimped portion 51 is obtained, for example, by performing a crimping process on the end portion on the first side in the axial direction itself of the cylindrical portion 52 in a state before the crimping process. Alternatively, the crimped portion 51 is obtained, for example, by performing a crimping process on a middle portion in the axial direction itself of the cylindrical portion 52 in a state before the crimping process.

When the crimped portion 51 is configured as a projection shape, the crimped portion 51 is obtained, for example, by performing a crimping process in which a part in the axial direction and in the circumferential direction of the cylindrical portion 52 in a state before the crimping process is pressed toward the inner side in the radial direction by a tip end portion of a tool such as a pin.

The number of the crimped portions 51 is arbitrary. The stopper member 6 may have only one crimped portion 51 or may have a plurality of crimped portions 51. When the stopper member 6 has a plurality of crimped portions 51, the plurality of crimped portions 51 may be arranged separated from each other in the circumferential direction or may be arranged separated from each other in the axial direction.

A position at which the crimped portion 51 is provided on the cylindrical portion 52 is arbitrary. The crimped portion 51 may be provided so as to be connected to an end portion on the first side in the axial direction of the cylindrical portion 52, or may be provided on at least a part of the cylindrical portion 52, for example, a middle portion in the axial direction of the cylindrical portion 52, or another portion.

The crimped portion 51 can prevent the stopper member 6 from moving toward the first side in the axial direction by strongly pressing the outer circumferential surface of the mounting shaft portion 20 toward the inner side in the radial direction even when the engaging surface 27 is not provided on the outer circumferential surface of the mounting shaft portion 20.

In the present example, the crimped portion 51 is configured as a protrusion piece shape extending in the axial direction from an end portion on the first side in the axial direction of the cylindrical portion 52. Further, the crimped portion 51 is provided at two locations on opposite sides in the diametrical direction of the end portion on the first side in the axial direction of the cylindrical portion 52. Therefore, the stopper member 6 has two crimped portions 51.

With such a configuration, a press load required for the crimping process can be reduced, and processing cost can be suppressed. Further, since the two crimped portions 51 can be processed simultaneously, the number of processing steps can be reduced, and cost can also be reduced from this viewpoint.

The crimped portion 51 preferably engages in the axial direction with the engaging surface 27 provided on the outer circumferential surface of the mounting shaft portion 20 in order to effectively prevent the stopper member 6 from coming off. Further, the crimped portion 51 may engage in the circumferential direction with another engaging surface provided on the outer circumferential surface of the mounting shaft portion 20 in order to prevent relative rotation of the stopper member 6 with respect to the mounting shaft portion 20.

In the present example, the crimped portion 51 is plastically deformed so as to bend toward the inner side in the radial direction as going toward the first side in the axial direction, and enters an inside of the recessed portion 28 provided on the convex curved surface 26 of the outer circumferential surface of the mounting shaft portion 20.

Each crimped portion 51 has an inner-side surface in the radial direction thereof pressed against the first inclined surface 30 of the inner surface 29 of the recessed portion 28, and an edge portion on the first side in the axial direction thereof engages in the axial direction with the second inclined surface 31 that constitutes the engaging surface 27 of the inner surface 29 of the recessed portion 28.

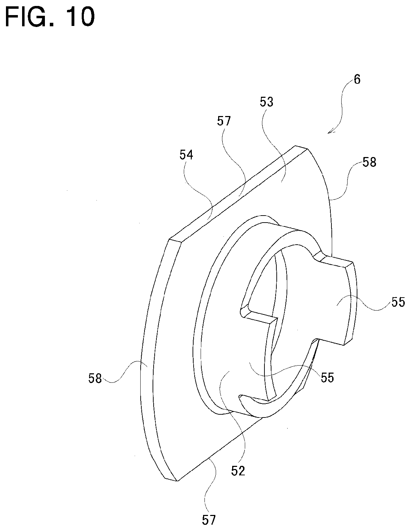

As illustrated in FIG. 10, the crimped portion 51 is formed by plastically deforming a partially cylindrical shaped claw portion 55 connected to an end portion on the first side in the axial direction of the cylindrical portion 52 toward the inner side in the radial direction after the cylindrical portion 52 is fitted onto the mounting shaft portion 20. Specifically, the crimped portion 51 is formed by pushing a jig (not illustrated) in the axial direction around the claw portion 55 to bend and deform the claw portion 55 toward the inner side in the radial direction.

In the present example, since the crimped portion 51 engages in the axial direction with the engaging surface 27 provided on the outer circumferential surface of the mounting shaft portion 20, it is possible to more effectively prevent the stopper member 6 from coming off from the mounting shaft portion 20.

The flange portion 53 is an element that faces the end surface 49 on the first side in the axial direction of the engaging element 5 in the axial direction and prevents the engaging element 5 from moving toward the first side in the axial direction.

In the present example, the flange portion 53 protrudes toward the outer side in the radial direction from an end portion on the second side in the axial direction of the cylindrical portion 52. A side surface 56 on the second side in the axial direction of the flange portion 53 is formed as a flat surface perpendicular to the central axis of the stopper member 6, and faces in the axial direction a portion on the inner side in the radial direction of the end surface 49 on the first side in the axial direction of the engaging element 5, which is located further on the inner side in the radial direction than an opening of a penetrating hole that constitutes the input-side engaged portion 42.

The shape of the flange portion 53 is not limited as long as the flange portion 53 is configured so as to prevent movement of the engaging element 5 toward the first side in the axial direction. The flange portion 53 may have any shape such as a hollow plate shape or a protrusion piece shape.

When the flange portion 53 is configured as a hollow plate shape, an outer peripheral edge portion 54 of the flange portion 53 may be formed in a circular shape or may be formed in a non-circular shape. When the flange portion 53 is configured as a hollow disk shape and has an outer peripheral edge portion 54 having a non-circular shape, the flange portion 53 may engage in the circumferential direction with the input-side engaging portion 14 to prevent relative rotation of the stopper member 6 with respect to the mounting shaft portion 20.

The shape of the flange portion 53 is preferably a shape such that an area facing the end surface 49 on the first side in the axial direction of the engaging element 5 can be increased in order to effectively prevent movement of the engaging element 5 toward the first side in the axial direction.

In the present example, the flange portion 53 is configured as a hollow plate shape and has an outer peripheral edge portion 54 having an non-circular shape when viewed from the axial direction. The outer peripheral edge portion 54 of the flange portion 53 has an oval contour shape in which a dimension in the second direction is larger than a dimension in the first direction. Specifically, the outer peripheral edge portion 54 of the flange portion 53 is composed of two linear portions 57 extending in the second direction and arranged parallel to each other, and two arc portions 58 connecting end portions of the two linear portions 57.

In the present example, a distance between the two linear portions 57 is set to be smaller than a distance between the two inner-side surfaces 44 in the radial direction when the two engaging elements 5 are moved in a direction approaching each other most closely, and larger than a distance between the two flat surface portions 47 when the two engaging elements 5 are moved such that a distance between the respective flat surface portions 47 becomes the largest. Therefore, the flange portion 53 does not interfere with engagement between the input-side engaging portion 14 and the input-side engaged portion 42.

Further, when the stopper member 6 attempts to relatively rotate with respect to the mounting shaft portion 20, two linear portions 57 of the outer peripheral edge portion 54 of the flange portion 53 engage in the circumferential direction with the input-side engaging portion 14. With such a shape of the flange portion 53, relative rotation of the stopper member 6 with respect to the mounting shaft portion 20 is prevented.

Therefore, it is possible to prevent the crimped portion 51 from being shifted from the convex curved surface 26 of the outer circumferential surface of the mounting shaft portion 20 in the circumferential direction. Accordingly, disengagement between the crimped portion 51 and the engaging surface 27 can be prevented, and thus it is possible to prevent the stopper member 6 from coming off.

In the present example, since the outer peripheral edge portion 54 of the flange portion 53 has an oval contour shape in which a dimension in the second direction is larger than a dimension in the first direction, an area of a portion facing the end surface 49 on the first side in the axial direction of the engaging element 5 in the axial direction can be sufficiently ensured.

In the reverse-input blocking clutch 1 of the present disclosure, the stopper member 6 has both functions of a retaining ring and one spacer arranged adjacent to the retaining ring in a conventional reverse-input blocking clutch. That is, since the stopper member 6 has the flange portion 53 facing the end surface 49 on the first side in the axial direction of the engaging element 5 in the axial direction, movement of the engaging element 5 toward the first side in the axial direction can be directly regulated by the stopper member 6. Therefore, a dedicated spacer for restricting movement of the engaging element 5 toward the first side in the axial direction is not required. Accordingly, in the reverse-input blocking clutch 1 of the present disclosure, the number of components can be reduced.

In the reverse-input blocking clutch 1 of the present disclosure, the cylindrical portion 52 of the stopper member 6 is fitted onto the mounting shaft portion 20 of the output member 4, and the stopper member 6 is crimped and fixed to the mounting shaft portion 20 by the crimped portion 51. Due to this, the stopper member 6 is sufficiently prevented from coming off. Accordingly, when an assembly in which the output member 4, the engaging element 5, the spacer 59, and the stopper member 6 are sub-assembled is transported, it is possible to prevent the assembly from being disassembled due to the stopper member 6 coming off from the output member 4. This also makes it possible to improve workability of assembly work of the reverse-input blocking clutch 1. Further, since the stopper member 6 is crimped and fixed to the mounting shaft portion 20 and is firmly fixed to the mounting shaft portion 20 by the crimped portion 51, a stopper member having a larger size can be used as compared with a conventional stopper member composed of a retaining ring.

In particular, in a structure in which the engaging surface 27 is provided on the outer circumferential surface of the mounting shaft portion 20, since the crimped portion 51 engages with the engaging surface 27 in the axial direction, it is possible to more effectively prevent the stopper member 6 from coming off from the mounting shaft portion 20.

### [Spacer]

The reverse-input blocking clutch 1 of the present example includes, as an optional component, a spacer 59 arranged between the end surface 32 on the first side in the axial direction of the output shaft portion 21 and the end surface 50 on the second side in the axial direction of the engaging element 5.

The spacer 59 is an element for restricting movement of the engaging element 5 toward the second side in the axial direction and for causing the position in the axial direction of the pressing surface 41 of the engaging element 5 to be aligned with the position in the axial direction of the pressed surface 7 of the pressed member 2.

The shape, size, and material of the spacer 59 are not limited as long as the spacer 59 is arranged between the end surface 32 on the first side in the axial direction of the output shaft portion 21 and the end surface 50 on the second side in the axial direction of the engaging element 5 and is configured so as to cause the position in the axial direction of the pressing surface 41 of the engaging element 5 to be aligned with the position in the axial direction of the pressed surface 7 of the pressed member 2.

In the present example, the spacer 59 is arranged around the output-side engaging portion 19 and between the end surface 32 on the first side in the axial direction of the output shaft portion 21 and each of the end surfaces 50 on the second side in the axial direction of the two engaging elements 5.

The spacer 59 has an end surface 60 on the second side in the axial direction facing in the axial direction the end surface 32 on the first side in the axial direction of the output shaft portion 21, and an end surface 61 on the first side in the axial direction facing in the axial direction the end surface 50 on the second side in the axial direction of the engaging element 5.

The spacer 59 can be composed of synthetic resin, rubber, a metal material, or the like.

In the present example, the spacer 59 is configured as a flat plate shape and has an end surface shape that is substantially rectangular or substantially oval when viewed from the axial direction. In the present example, the end surface 60 on the second side in the axial direction and the end surface 61 on the first side in the axial direction of the spacer 59 are arranged parallel to each other and are each formed as a flat surface.

In the present example, the spacer 59 has a through hole 62 through which the output-side engaging portion 19 is inserted. The through hole 62 penetrates a central portion of the spacer 59 in the axial direction, has an opening shape that is substantially rectangular or substantially oval when viewed from the axial direction, and has a size that allows the output-side engaging portion 19 to be inserted without looseness.

In the present example, the spacer 59 has a chamfered portion 63 at an opening edge portion on the second side in the axial direction of the through hole 62. The chamfered portion 63 is composed of a C chamfered portion having a linear cross-sectional shape. A chamfer depth of the chamfered portion 63 is set to a size that can prevent interference between the chamfered portion 63 and the corner R portion 40 of the output member 4.

### [Biasing Member]

The reverse-input blocking clutch 1 of the present example further includes a biasing member 64 as an optional component.

The biasing member 64 elastically biases the engaging element 5 in a direction toward the pressed surface 7. The biasing member 64 can be composed of a spring such as a leaf spring, a coil spring, or a disc spring, or can be composed of an elastic material such as rubber, an elastomer, or a synthetic resin. The number of the biasing members 64 is not particularly limited and is appropriately determined according to the number of the engaging element 5.

In the present example, the biasing member 64 is composed of two biasing members 64 arranged at two locations in the width direction between the inner-side surfaces in the radial direction of the two engaging elements 5, and each of the biasing members 64 is composed of a compression coil spring. The protruding portions 48 are inserted inside end portions on both sides in an extending direction of each of the biasing members 64. Due to this, it is possible to prevent each of the biasing members 64 from coming off from a portion between the two engaging elements 5.

The two biasing members 64 elastically bias the two engaging elements 5 in a direction toward the pressed surface 7 by elastic restoring force. Due to this, in a neutral state where no torque is applied to either the input member 3 or the output member 4, the pressing surfaces 41 of the two engaging elements 5 are brought into contact with the pressed surface 7.

### [Support Member]

The reverse-input blocking clutch 1 of the present example further includes a support member 65 as an optional component.

The support member 65 is an element for rotatably supporting an end portion on the second side in the axial direction of the output shaft portion 21 (the small diameter portion 35).

The support member 65 includes a bearing holding portion 66 having a cylindrical shape; a partially cylindrical portion 67 extending toward the first side in the axial direction from one location in the circumferential direction of an end portion on the first side in the axial direction of the bearing holding portion 66; and an outward flange portion 68 extending toward the outer side in the radial direction from an end portion on the first side in the axial direction of the partially cylindrical portion 67.

The support member 65 is supported and fixed to the housing element 8 by screwing a bolt 70 inserted through a through hole 69 provided in the outward flange portion 68 into the screw hole 13 provided in the housing element 8.

The end portion on the second side in the axial direction of the output shaft portion 21 (the small diameter portion 35) is rotatably supported by the support member 65 through a radial rolling bearing 39b held by the bearing holding portion 66.

In the illustrated example, each of the radial rolling bearings 39a, 39b for rotatably supporting the output shaft portion 21 is composed of a ball bearing using balls as rolling elements. However, the radial rolling bearing for supporting the output shaft portion 21 can also be composed of a tapered roller bearing using tapered rollers or a roller bearing using cylindrical rollers as rolling elements. Further, different types of bearings can be used as the radial rolling bearings 39a, 39b.

### [Operation Description of Reverse-Input Blocking Clutch]

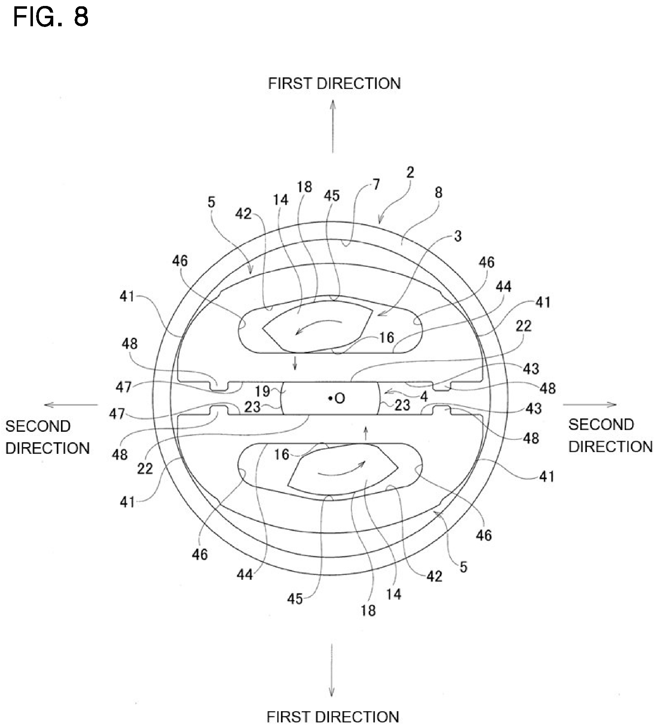

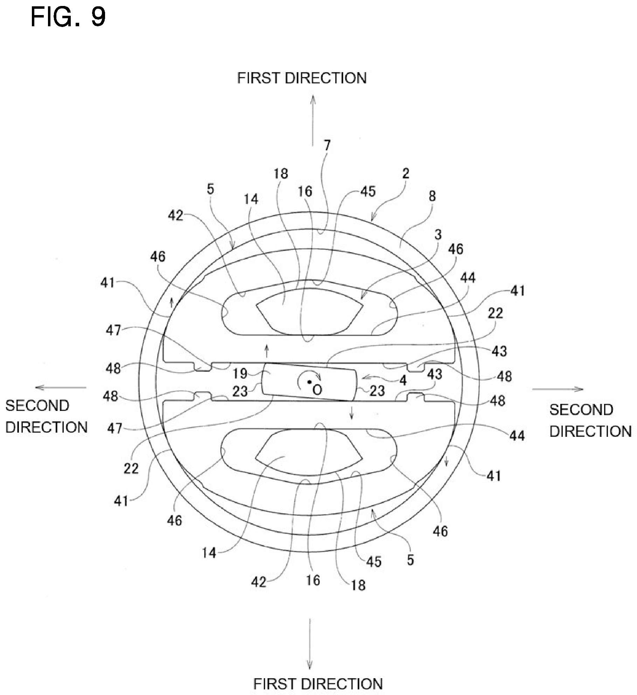

An operation of the reverse-input blocking clutch 1 of the present example will be described with reference to FIG. 8 and FIG. 9. In FIG. 8 and FIG. 9, the biasing member 64 and the stopper member 6 are omitted, and the gaps in the radial direction between the input member 3 and the output member 4, and the two engaging elements 5 are exaggerated.

When rotational torque is input to the input member 3, regardless of the rotational direction of the input member 3, the two engaging elements 5 move in a direction away from the pressed surface 7. Specifically, as illustrated in FIG. 8, the input-side engaging portion 14 rotates in the rotational direction of the input member 3 (counterclockwise direction in the example of FIG. 8) inside the input-side engaged portion 42.

As a result, a gap between the inner-side surface 16 in the radial direction of the input-side engaging portion 14 and the inner-side surface 44 in the radial direction of the input-side engaged portion 42 is reduced, and the inner-side surface 16 in the radial direction of the input-side engaging portion 14 is brought into contact with the inner-side surface 44 in the radial direction of the input-side engaged portion 42.

From this state, when the input member 3 further rotates, the inner-side surface 44 in the radial direction of the input-side engaged portion 42 is pressed toward the inner side in the radial direction by the inner-side surface 16 in the radial direction of the input-side engaging portion 14, and the engaging element 5 moves in the direction away from the pressed surface 7. That is, based on engagement with the input member 3, the two engaging elements 5 move toward the inner side in the radial direction, which is a direction toward each other, such that the inner-side surfaces in the radial direction of the two engaging elements 5 approach each other, and the output-side engaging portion 19 of the output member 4 is held from both sides in the radial direction by the output-side engaged portions 43 of the two engaging elements 5.

In this manner, while rotating the output member 4 such that the flat surface 22 of the output-side engaging portion 19 becomes parallel to the output-side engaged portion 43, the output-side engaging portion 19 and the output-side engaged portion 43 of the engaging element 5 are engaged without looseness. As a result, rotational torque input to the input member 3 is transmitted to the output member 4 through the two engaging elements 5 and is output from the output member 4.

When rotational torque is reversely input to the output member 4, regardless of the rotational direction of the output member 4, the two engaging elements 5 move in a direction toward the pressed surface 7. Specifically, as illustrated in FIG. 9, the output-side engaging portion 19 rotates in the rotational direction of the output member 4 (clockwise direction in the example of FIG. 9) inside between the output-side engaged portions 43 of the two engaging elements 5. Then, the output-side engaged portion 43 is pressed toward the outer side in the radial direction by the flat surface 22 of the outer circumferential surface of the output-side engaging portion 19, and the two engaging elements 5 move in a direction toward the pressed surface 7.

That is, the two engaging elements 5 move toward the outer side in the radial direction, which is a direction away from each other, based on engagement with the output member 4, such that the pressing surfaces 41 of the two engaging elements 5 come into contact with the pressed surface 7 and frictionally engage with the pressed surface 7.

As a result, rotational torque reversely input to the output member 4 is completely blocked and is not transmitted to the input member 3, or only a part of the rotational torque reversely input to the output member 4 is transmitted to the input member 3 and a remaining part thereof is blocked.

In order to completely block the rotational torque reversely input to the output member 4 so as not to transmit the rotational torque to the input member 3, the engaging element 5 is braced (clamped) between the output-side engaging portion 19 and the pressed member 2 so that the pressing surface 41 of the engaging element 5 does not slide (relatively rotate) with respect to the pressed surface 7, thereby locking the output member 4.

In order to allow only a part of the rotational torque reversely input to the output member 4 to be transmitted to the input member 3 and block the remaining part thereof, the engaging element 5 is braced (clamped) between the output-side engaging portion 19 and the pressed member 2 so that the pressing surface 41 of the engaging element 5 slides with respect to the pressed surface 7, thereby semi-locking the output member 4.

In the reverse-input blocking clutch 1 of the present example, sizes of the gaps between the respective components are adjusted so as to enable the above-described operations. In particular, in a positional relationship where the pressing surfaces 41 of the two engaging elements 5 are in contact with the pressed surface 7, a gap is provided between the inner-side surface 16 in the radial direction of the input-side engaging portion 14 and the inner-side surface 44 in the radial direction of the input-side engaged portion 42.

Due to this, when rotational torque is reversely input to the output member 4, interruption of movement of the engaging element 5 toward the outer side in the radial direction by the input-side engaging portion 14 is prevented, and even after the pressing surface 41 comes into contact with the pressed surface 7, surface pressure acting on a contact portion between the pressing surface 41 and the pressed surface 7 is caused to change in accordance with a magnitude of the rotational torque reversely input to the output member 4, so that locking or semi-locking of the output member 4 is appropriately performed.

In the reverse-input blocking clutch 1 of the present disclosure, since the stopper member 6 can effectively be prevented from coming off from the output member 4, it is possible to reliably prevent the engaging element 5 from tilting in the axial direction, and it is also possible to prevent an assembly in which the output member 4, the engaging element 5, the spacer 59, and the stopper member 6 are sub-assembled from being disassembled due to the stopper member 6 coming off from the output member 4 during transportation of the assembly.

Further, in the reverse-input blocking clutch 1 of the present disclosure, since the stopper member 6 has both functions of a retaining ring and a spacer arranged adjacent to the retaining ring in a conventional reverse-input blocking clutch, it is possible to reduce the number of parts.

### [Second Example]

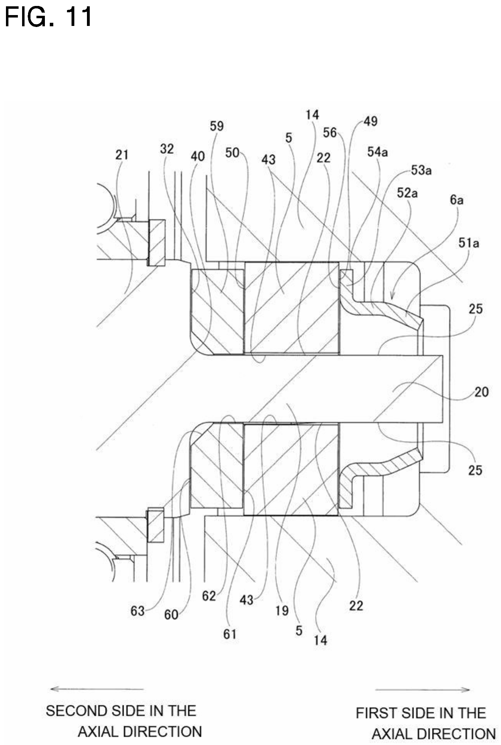

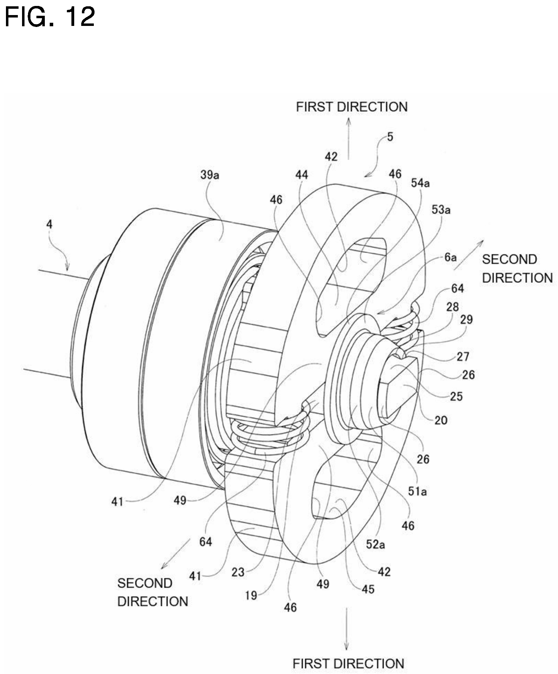

A second example of an embodiment of the present disclosure will be described with reference to FIG. 11 and FIG. 12.

In the present example, only structures of a crimped portion 51a and a flange portion 53a of a stopper member 6a are different from those of the first example. Structures of other portions, including the mounting shaft portion 20, are the same as the structure of the reverse-input blocking clutch 1 of the first example.

The crimped portion 51a is configured in an annular shape continuous in the circumferential direction. The crimped portion 51a is connected to an end portion on the first side in the axial direction of a cylindrical portion 52a. The crimped portion 51a has a tapered cylindrical shape in which an outer diameter and an inner diameter thereof become smaller as going toward the first side in the axial direction.

The crimped portion 51a is pressed against an outer circumferential surface of the mounting shaft portion 20 only at two locations on opposite sides in the diametrical direction thereof. That is, only two locations on opposite sides in the diametrical direction of the crimped portion 51a enter inside recessed portions 28 provided in the convex curved surfaces 26.

At the two locations on opposite sides in the diametrical direction, an inner-side surface in the radial direction of the crimped portion 51a is pressed against the first inclined surface 30 of the inner surface 29 of the recessed portion 28, and an edge portion on the first side in the axial direction thereof is engaged in the axial direction with a second inclined surface 31 that constitutes the engaging surface 27 of the inner surface 29 of the recessed portion 28.

The crimped portion 51a is formed by plastically deforming, over an entire circumference, an end portion on the first side in the axial direction itself of the cylindrical portion 52a toward the inner side in the radial direction after the cylindrical portion 52a is fitted onto the mounting shaft portion 20.

The flange portion 53a is configured in a hollow disk shape and has an outer peripheral edge portion 54a having a circular shape. The flange portion 53a has an outer diameter smaller than a diameter of an inscribed circle of the input-side engaging portion 14. The inscribed circle of the input-side engaging portion 14 refers to an imaginary circle centered on the central axis of the input member 3 and passing through an end portion on the inner side in the radial direction of the input-side engaging portion 14.

In the present example, since the crimped portion 51a is continuous in the circumferential direction, even when the stopper member 6a relatively rotates with respect to the mounting shaft portion 20, any part in the circumferential direction of the crimped portion 51a is engaged in the axial direction with the engaging surface 27 provided on the outer circumferential surface of the mounting shaft portion 20. Due to this, even when the stopper member 6a relatively rotates with respect to the mounting shaft portion 20, the stopper member 6a is prevented from coming off from the mounting shaft portion 20.

In the present example, since relative rotation of the stopper member 6a with respect to the mounting shaft portion 20 is allowed, the flange portion 53a has an outer diameter smaller than the diameter of the inscribed circle of the input-side engaging portion 14. Due to this, even when the stopper member 6a relatively rotates with respect to the mounting shaft portion 20, the flange portion 53a does not engage with the input-side engaging portion 14 in the circumferential direction.

Other configurations and advantageous effects of the second example are the same as those of the first example.

The first example and the second example of the embodiment of the present disclosure can be implemented in combination as appropriate as long as no contradiction occurs.

### REFERENCE SIGNS LIST

1 Reverse-input blocking clutch
2 Pressed member
3 Input member
4 Output member
5 Engaging element
6, 6a Stopper member
7 Pressed surface
8 Housing element
9 Large-diameter cylindrical surface portion
10 Small-diameter cylindrical surface portion
11 Connecting surface portion
12 Inward flange portion
13 Screw holes
14 Input-side engaging portion
15 Input shaft portion
16 Inner-side surface in the radial direction
17 Input flange portion
18 Outer-side surface in the radial direction
19 Output-side engaging portion
20 Mounting shaft portion
21 Output shaft portion
22 Flat surfaces
23 Convex curved surfaces
24 End surface
25 Flat surfaces
26 Convex curved surfaces
27 Engaging surface
28 Recessed portion
29 Inner surface
30 First inclined surface
31 Second inclined surface
32 End surface
33 Large diameter portion
34 Medium diameter portion
35 Small diameter portion
36 Flange portion
37 Speed reducer
38 Drive pulley
39a, 39b Radial rolling bearings
40 Corner R portion
41 Pressing surface
42 Input-side engaged portion
43 Output-side engaged portion
44 Inner-side surface in the radial direction
45 Outer-side surface in the radial direction
46 Side surface in the circumferential direction
47 Flat surface portions
48 Protruding portion
49 End surface
50 End surface
51, 51a Crimped portion
52, 52a Cylindrical portion
53, 53a Flange portion
54, 54a Outer peripheral edge portion
55 Claw portion
56 Side surface
57 Linear portion
58 Arc portion
59 Spacer
60 End surface
61 End surface
62 Through hole
63 Chamfered portion
64 Biasing member
65 Support member
66 Bearing holding portion
67 Partially cylindrical portion
68 Outward flange portion
69 Through hole
70 Bolt
71 Toothed belt

## Claims

1. A reverse-input blocking clutch comprising:
a pressed member having a pressed surface on an inner circumferential surface thereof;
an input member having an input-side engaging portion arranged on an inner side in a radial direction of the pressed surface, connected to an input-side mechanism on a first side in an axial direction, and arranged so as to be coaxial with the pressed surface;
an output member having an output-side engaging portion arranged further on the inner side in the radial direction than the input-side engaging portion, connected to an output-side mechanism on a second side in the axial direction, and arranged so as to be coaxial with the pressed surface;
an engaging element having a pressing surface facing the pressed surface, an input-side engaged portion capable of engaging with the input-side engaging portion, and an output-side engaged portion capable of engaging with the output-side engaging portion, and arranged so as to allow the pressing surface to move in a direction toward and away from the pressed surface; and
a stopper member for regulating axial movement of the engaging element with respect to the output member,
the engaging element, when rotational torque is input to the input member, moving in a direction away from the pressed surface with respect to the radial direction based on the input-side engaging portion engaging with the input-side engaged portion, and transmitting the rotational torque input to the input member to the output member by causing the output-side engaged portion to engage with the output-side engaging portion, whereas when rotational torque is reversely input to the output member, pressing the pressing surface against the pressed surface based on the output-side engaging portion engaging with the output-side engaged portion so as to frictionally engage the pressing surface with the pressed surface,
the output member having a mounting shaft portion that protrudes toward the first side in the axial direction from an end surface on the first side in the axial direction of the output-side engaging portion, and
the stopper member having a cylindrical portion fitted onto the mounting shaft portion; a flange portion connected to the second side in the axial direction of the cylindrical portion and facing in the axial direction an end surface on the first side in the axial direction of the engaging element; and a crimped portion formed in at least a part of the cylindrical portion or connected to at least a part in a circumferential direction of an end portion on the first side in the axial direction of the cylindrical portion, the stopper member being crimped and fixed to the mounting shaft portion by the crimped portion.

2. The reverse-input blocking clutch according to claim 1, wherein the crimped portion is connected to the end portion on the first side in the axial direction of the cylindrical portion and is configured in a protruding piece shape.

3. The reverse-input blocking clutch according to claim 2, wherein the crimped portion is provided at two locations on opposite sides in a diametrical direction of the cylindrical portion.

4. The reverse-input blocking clutch according to claim 1, wherein the crimped portion is configured in an annular shape continuous in the circumferential direction.

5. The reverse-input blocking clutch according to claim 4, wherein the crimped portion is connected to the end portion on the first side in the axial direction of the cylindrical portion and is configured in a tapered cylindrical shape.

6. The reverse-input blocking clutch according to any one of claims 1 to 5, wherein the mounting shaft portion has, on an outer circumferential surface thereof, an engaging surface facing the second side in the axial direction and engaging with the crimped portion in the axial direction.

7. The reverse-input blocking clutch according to claim 6, wherein the mounting shaft portion has, on the outer circumferential surface thereof, a recessed portion into which the crimped portion enters, and the engaging surface is composed of an inner surface of the recessed portion.

8. The reverse-input blocking clutch according to claim 7, wherein the recessed portion is provided at two locations on opposite sides in the diametrical direction of the outer circumferential surface of the mounting shaft portion.

9. The reverse-input blocking clutch according to any one of claims 1 to 8, wherein a gap in the axial direction is provided between the end surface on the first side in the axial direction of the engaging element and a side surface on the second side in the axial direction of the flange portion.

10. The reverse-input blocking clutch according to any one of claims 1 to 9, wherein the flange portion has an outer peripheral edge portion having a non-circular shape when viewed from the axial direction, and engages with the input-side engaging portion in the circumferential direction to prevent relative rotation of the stopper member with respect to the mounting shaft portion.

11. The reverse-input blocking clutch according to any one of claims 1 to 9, wherein the flange portion has an outer peripheral edge portion having a circular shape when viewed from the axial direction, and has an outer diameter smaller than a diameter of an inscribed circle of the input-side engaging portion.

12. The reverse-input blocking clutch according to any one of claims 1 to 11, wherein the stopper member is brought into contact with an end surface on the first side in the axial direction of the output-side engaging portion, and is positioned in the axial direction with respect to the output member.

13. The reverse-input blocking clutch according to any one of claims 1 to 12, wherein the mounting shaft portion has a non-cylindrical shape.

14. The reverse-input blocking clutch according to claim 13, wherein the mounting shaft portion has a cross-sectional shape that is the same as or similar to a shape of the end surface on the first side in the axial direction of the output-side engaging portion.

15. The reverse-input blocking clutch according to any one of claims 1 to 14, wherein
the output member has an output shaft portion having an end surface on the first side in the axial direction from which the output-side engaging portion protrudes toward the first side in the axial direction, and
a spacer is arranged between the end surface on the first side in the axial direction of the output shaft portion and an end surface on the second side in the axial direction of the engaging element.
